**Europäisches Patentamt**

**European Patent Office**

**Office européen des brevets**

(19)

(11) Veröffentlichungsnummer: **0 407 642 A1**

## (12) EUROPÄISCHE PATENTANMELDUNG

(21) Anmeldenummer: **89112871.2**

(22) Anmeldetag: **13.07.89**

(51) Int. Cl.5: **G06F 5/06**

(43) Veröffentlichungstag der Anmeldung:
**16.01.91 Patentblatt 91/03**

(84) Benannte Vertragsstaaten:
**AT BE CH DE ES FR GB GR IT LI NL SE**

(71) Anmelder: **Siemens Aktiengesellschaft**
**Wittelsbacherplatz 2**
**D-8000 München 2(DE)**

(72) Erfinder: **O'Higgins, Niall, Dr.-Ing.**
**Friedenheimer Strasse 153**
**D-8000 München 21(DE)**

(54) **Durchlaufspeicheranordnung.**

(57) Die Durchlaufspeicheranordnung ("First-In-First-Out"- Speicheranordnung) weist eine Mehrzahl von in Kette geschalteten, für die Zwischenspeicherung einer Binärsignalfolge dienenen flankengesteuerten Registerstufen (DFF2,... DFFn-1) auf, denen jeweils eine gesonderte Steuereinrichtung (ST2,..., STn-1) individuell zugeordnet ist. Jeder dieser Steuereinrichtungen ist dabei eine flankengesteuerte Zustandskippstufe (FF6) zugehörig, durch welche einerseits der momentane Zustand (Freizustand bzw. Belegtzustand) der zugeordneten Registerstufe angezeigt ist und andererseits der zugeordneten Registerstufe Steuersignale in Form von Impulsflanken zugeführt sind, auf deren Auftreten hin jeweils ein Binärsignal der Binärtsignalfolge in die zugeordnete Registerstufe aufgenommen wird. Die flankengesteuerten Zustandskippstufen sind dabei synchron mit einer Steuertaktimpulsfolge beaufschlagt.

FIG 1

EP 0 407 642 A1

# DURCHLAUFSPEICHERANORDNUNG

Die Erfindung betrifft eine Durchlaufspeicheranordnung gemäß Oberbegriff des Patentanspruches 1.

Eine derartige Durchlaufspeicheranordnung ist bereits bekannt (US-PS 3 953 838). Bei dieser bekannten Durchlaufspeicheranordnung weisen den einzelnen für die Weiterleitung der Binärsignalfolge dienenden Registerstufen individuell zugeordnete Steuereinrichtungen, die asynchron betrieben sind, für die Steuerung der Weiterleitung der Binärsignalfolge jeweils einen von einer Verknüpfungsanordnung her ansteuerbaren Impulsgeber in Form einer monostabilen Kippstufe sowie eine gesonderte Zustandskippstufe auf. Die für die Weiterleitung der Binärsignalfolge dienenden Registerstufen sind dabei als zustandsgesteuerte Kippstufen ausgebildet, denen jeweils eine Schalteranordnung vorgeschaltet ist. Diese Schalteranordnung wird mit dem Auftreten eines Impulses am Ausgang der zugeordneten monostabilen Kippstufe leitfähig gesteuert, um der jeweiligen Registerstufe ein in der unmittelbar vorangehenden Registerstufe gerade gespeichertes Binärsignal zuzuführen.

Der Nachteil der bekannten Durchlaufspeicheranordnung besteht darin, daß einerseits für die einzelnen Steuereinrichtungen ein relativ hoher schaltungstechnischer Aufwand erforderlich ist und daß andererseits durch die Verwendung monostabiler Kippstufen für die Steuerung der einzelnen Registerstufen große Laufzeitschwankungen bei der Weiterleitung von Binärsignalen von Registerstufe zu Registerstufe auftreten können, die zuweilen unerwünscht sind. Darüber hinaus kann sich auch der Spannungsabfall über den mit den einzelnen Registerstufen verbundenen Schalteranordnungen für bestimmte Anwendungsfälle der Durchlaufspeicheranordnung störend auswirken.

Darüber hinaus ist bereits eine Durchlaufspeicheranordnung mit einer Mehrzahl von direkt gekoppelten impulsgesteuerten Registerstufen und diesen individuell zugeordneten Steuereinrichtungen bekannt ("MOS/CCD Databook", der Firma Fairchild Semiconductor, Ausgabe 1975, Seiten 3-44 und 3-45). Auf die schaltungstechnische Realisierung der einzelnen Steuereinrichtungen, die ebenfalls asynchron betrieben sind, ist dabei jedoch nicht näher eingegangen.

Es ist nun Aufgabe der vorliegenden Erfindung, einen Weg zu zeigen, wie bei einer Durchlaufspeicheranordnung der eingangs genannten Art einerseits der schaltungstechnische Aufwand für die einzelnen Steuereinrichtungen gegenüber dem Stand der Technik reduziert werden kann und andererseits Laufzeitschwankungen bei der Weiterleitung von Binärsignalen innerhalb der Durchlaufspeicheranordnung vermieden werden können.

Diese Aufgabe wird bei einer Durchlaufspeicheranordnung gemäß Oberbegriff des Patentanspruches 1 durch die im kennzeichnenden Teil dieses Patentanspruches angegebenen Merkmale gelöst.

Der Vorteil der Erfindung besteht darin, daß einerseits in jeder der Steuereinrichtungen eine flankengesteuerte Zustandskippstufe vorgesehen ist, welche gleichzeitig für die Abgabe von Steuersignalen an die der jeweiligen Steuereinrichtung zugeordnete Registerstufe benutzt ist, und daß andererseits sämtliche Zustandskippstufen synchron durch Bereitstellen einer Steuertaktimpulsfolge gesteuert sind. Durch diese synchrone Steuerung der Steuereinrichtungen ist die Laufzeit eines Binärsignals durch die Durchlaufspeicheranordnung lediglich durch die Anzahl der zu der Durchlaufspeicheranordnung gehörenden Registerstufen und der Folgefrequenz der Steuertaktimpulse festgelegt.

Weitere vorteilhafte Ausgestaltungen der Erfindung ergeben sich aus den Unteransprüchen.

Im folgenden wird die vorliegende Erfindung anhand von Zeichnungen beispielsweise näher erläutert.

FIG 1 zeigt eine Durchlaufspeicheranordnung gemäß der vorliegenden Erfindung,

FIG 2 zeigt einen möglichen Aufbau der in FIG 1 lediglich schematisch dargestellten Steuereinrichtungen und

FIGUREN 3 bis 5 zeigen jeweils Impulsdiagramme, auf die im Zuge der nachfolgenden Beschreibung näher eingegangen wird.

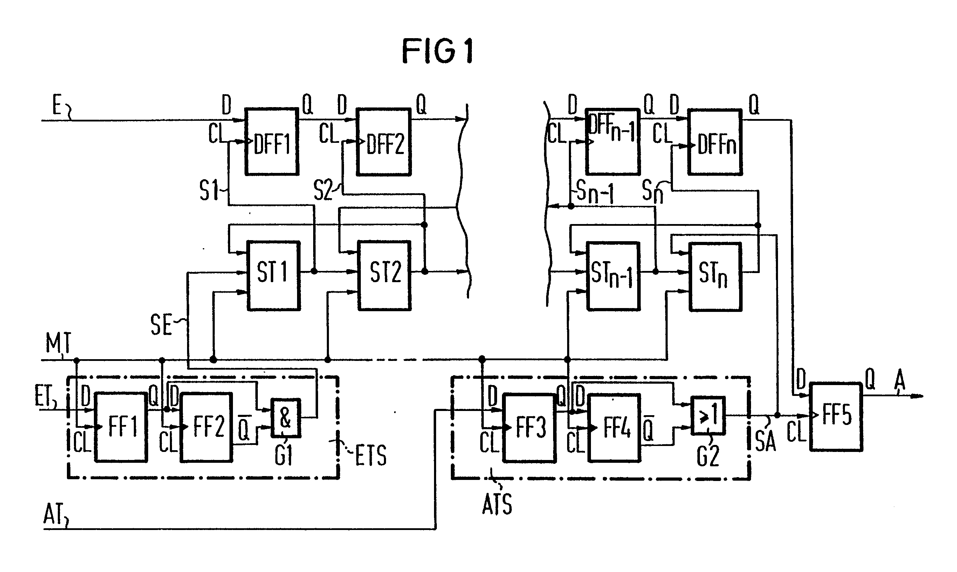

In FIG 1 ist eine Durchlaufspeicheranordnung für die Aufnahme und Weiterleitung einer eine Vielzahl von Binärsignalen aufweisenden Binärsignalfolge dargestellt. Eine derartige Durchlaufspeicheranordnung wird auch als "First-In-First-Out"-Speicheranordnung bezeichnet. Die Aufnahme nacheinander auftretender Binärsignale erfolgt dabei über einen Eingang E nach Maßgabe zusammen mit diesen Binärsignalen auftretenden Empfangstaktimpulsen ET. Die Weiterleitung zunächst zwischengespeicherter Binärsignale erfolgt dann über einen Ausgang A unter der Steuerung von Sendetaktimpulsen AT, welche ggf. eine gegenüber der Phasenlage der Empfangstaktimpulse abweichende Phasenlage aufweisen können. Eine derartige Durchlaufspeicheranordnung ist somit beispielsweise in Datenübertragungseinrichtungen einsetzbar, um für die weitere Bearbeitung von über ein Übertragungssystem synchron mit einem Übertragungstakt übertragener Datensignale innerhalb der jeweiligen Datenübertragungseinrichtung zwischen einem internen Bearbeitungstakt und dem externen Übertragungstakt auftretende Phasenjitter bzw.

"Wander" auszugleichen.

Die in FIG 1 dargestellte Durchlaufspeicheranordnung weist eine Mehrzahl von in Kette geschalteten, flankengesteuerten Registerstufen DFF1 bis DFFn auf, die bei dem hier vorliegenden Ausführungsbeispiel als D-Kippstufen ausgebildet sind. Die D-Kippstufe DFF1 ist dabei einer Eingangsstufe zugehörig und erhält an ihrem D-Eingang die bereits erwähnte Binärsignalfolge zugeführt. Ein mit Q bezeichneter Ausgang dieser D-Kippstufe ist dem D-Ein gang der nachfolgenden D-Kippstufe, d. h. der D-Kippstufe DFF2, zugeführt. In entsprechender Weise sind auch die nachfolgenden D-Kippstufen bis zur D-Kippstufe DFFn miteinander verbunden. Ein Ausgang Q dieser D-Kippstufe ist an einen D-Eingang einer weiteren, ausgangsseitig mit dem bereits genannten Ausgang A verbundenen D-Kippstufe FF5 angeschlossen. Die beiden zuletzt genannten D-Kippstufen sind dabei einer Ausgangsstufe der Durchgangsspeicheranordnung zugehörig. Jeder der genannten D-Kippstufen ist individuell eine Steuereinrichtung zugeordnet,wobei diese, wie im folgenden noch erläutert wird, in Kette geschaltet sind. Entsprechend ihrer Zuordnung zu den einzelnen D-Kippstufen sind diese mit ST1 bis STn bezeichnet. Über einen Ausgang stehen diese Steuereinrichtungen jeweils mit einem Taktsignaleingang CL der zugeordneten D-Kippstufe in Verbindung. Die dafür vorgesehenen Verbindungsleitungen sind entsprechend ihrer Zugehörigkeit zu den Steuereinrichtungen ST1 bis STn mit S1 bis Sn bezeichnet.

Die Steuereinrichtungen ST1 bis STn weisen jeweils drei Eingänge auf. An einem ersten Eingang sind diese synchron mit einer Steuertaktimpulsfolge MT beaufschlagt, deren einzelne Steuertaktimpulse mit einer gegenüber der Folgefrequenz der Empfangstaktimpulse ET wesentlich höheren Folgefrequenz auftreten. Über einen zweiten Steuereingang steht die Steuereinrichtung ST1 über eine Leitung SE mit einer Eingangssynchronisiereinrichtung ETS in Verbindung, welcher die gerade erwähnte Steuertaktimpulsfolge MT und die Empfangstaktimpulse ET zugeführt sind. Der zweite Eingang jeder der übrigen Steuereinrichtungen (ST2 bis STn) ist dagegen mit dem Ausgang der jeweils unmittelbar vorangehenden Steuereinrichtung verbunden. Der dritte Eingang der Steuereinrichtungen ST1 bis STn-1 ist schließlich an den Ausgang der unmittelbar nachfolgenden Steuereinrichtung angeschlossen. Bei der Steuereinrichtung STn steht dagegen der dritte Eingang mit dem Ausgang SA einer Ausgangssynchronisiereinrichtung ATS in Verbindung, der eingangsseitig die Steuertaktimpulsfolge MT und die bereits erwähnten Sendetaktimpulse AT zugeführt sind. Der Ausgang SA dieser Ausgangssynchronisiereinrichtung steht im übrigen außerdem mit einem Taktsignaleingang der bereits erwähnten D-Kippstufe FF5 in Verbindung.

Die zuvor erwähnte Eingangsstufe wird im übrigen aus der D-Kippstufe DFF1, der dieser zugeordneten Steuereinrichtung ST1 und der Eingangssynchronisiereinrichtung ETS gebildet. Der ebenfalls bereits erwähnten Ausgangsstufe sind dagegen die D-Kippstufe DFFn, die dieser zugehörige Steuereinrichtung STn, die D-Kippstufe FF5 und die Ausgangssynchronisiereinrichtung ATS zugehörig.

Ehe im folgenden auf den Aufbau der einzelnen Steuereinrichtungen ST1 bis STn sowie der Synchronisiereinrichtungen ETS und ATS näher eingegangen wird, sei hier zunächst kurz das Steuerprinzip für die Aufnahme und Weiterleitung einer Binärsignalfolge erläutert.

In jeder der Steuereinrichtungen ST1 bis STn ist der momentane Zustand der zugeordneten D-Kippstufe DFF1 bis DFFn gespeichert, d. h. in jeder der Steuereinrichtungen liegt eine Anzeige vor, ob die zugehörige D-Kippstufe gerade durch ein Binärsignal der Binärsignalfolge belegt ist oder nicht. Mit dem Auftreten eines Empfangstaktimpulses ET wird von der Eingangssynchronisiereinrichtung ETS her der Steuereinrichtung ST1 ein Ausgangsimpuls zugeführt, dessen Impulsbreite der Periodendauer eines Steuertaktimpulses der Steuertaktimpulsfolge MT entspricht. Ist mit dem Auftreten eines solchen Ausgangsimpulses in der Steuereinrichtung ST1 ein Freizustand für die D-Kippstufe DFF1 angezeigt, so wird diese Anzeige in eine Anzeige eines Belegtzustandes geändert und der D-Kippstufe DFF1 eine durch diesen Anzeigewechsel hervorgerufene Impulsflanke als Steuersignal über die Leitung S1 zugeführt. Das Auftreten dieser Impulsflanke bewirkt, daß ein zusammen mit dem Empfangstaktimpuls ET auftretendes Binärsignal über den Eingang E in die D-Kippstufe DFF1 aufgenommen wird.

Die betreffende Anzeige eines Belegtzustandes wird der nachfolgenden Steuereinrichtung, d. h. der Steuereinrichtung ST2, zugeführt. Liegt dabei in dieser Steuereinrichtung eine Anzeige eines Freizustandes für die D-Kippstufe DFF2 vor, so wird diese Anzeige in eine Anzeige eines Belegtzustandes geändert und der D-Kippstufe DFF2 von der Steuereinrichtung ST2 her eine durch den Anzeigewechsel hervorgerufene Impulsflanke als Steuersignal über die Leitung S2 zugeführt. Das Auftreten dieser Impulsflanke bewirkt dabei, daß einerseits das bis zu diesem Zeitpunkt in der D-Kippstufe DFF1 gespeicherte Binärsignal in die D-Kippstufe DFF2 übernommen wird und daß andererseits die in der Steuereinrichtung ST1 gespeicherte Anzeige eines Belegtzustandes in eine Anzeige eines Freizustandes für die D-Kippstufe DFF1 geändert wird. Von diesem Zeitpunkt an steht dann diese Kippstufe wieder für die Aufnahme eines weiteren Binärsignals zur Verfügung. Dieses Verfahren wird dann von Steuereinrichtung zu Steuereinrichtung fortgesetzt, so daß die einzelnen Binärsignale die D-Kippstufen DFF1 bis DFFn nacheinander durchlaufen.

Liegt in der D-Kippstufe DFFn ein weiterzuleitendes Binärsignal vor, d. h. ist in der zugeordneten Steuereinrichtung STn ein Belegtzustand angezeigt, so wird mit dem Auftreten eines Ausgangsimpulses am Ausgang der Ausgangssynchronisiereinrichtung ATS einerseits das betreffende Binärsignal in die D-Kippstufe FF5 übernommen und von dort aus über den Ausgang A weitergeleitet und andererseits in der Steuereinrichtung STn die bisherige Anzeige in eine Anzeige eines Freizustandes geändert. Ein solcher Ausgangsimpuls wird mit jedem Auftreten eines Sendetaktimpulses AT bereitgestellt, wobei dessen Impulsbreite der Periodendauer eines Steuertaktimpulses der Steuertaktimpulsfolge MT entspricht.

Im folgenden wird nun auf den Aufbau der Synchronisiereinrichtungen ETS und ATS sowie der Steuereinrichtung ST1 bis STn näher eingegangen.

Die in FIG 1 dargestellten Synchronisiereinrichtungen ETS und ATS weisen jeweils zwei in Kette geschaltete, flankengesteuerte D-Kippstufen FF1 und FF2 bzw. FF3 und FF4 auf. Die den Eingang der beiden Synchronisiereinrichtungen bildenden D-Kippstufen FF1 und FF3 sind dabei mit den Empfangstaktimpulsen ET bzw. den Sendetaktimpulsen AT beaufschlagt. Mit einem nichtinvertierenden Ausgang Q stehen diese beiden D-Kippstufen mit dem D-Eingang der jeweils nachfolgenden D-Kippstufe FF2 bzw. FF4 in Verbindung. Sämtlichen D-Kippstufen der beiden Synchronisiereinrichtungen ist außerdem über jeweils einen gesonderten Taktsignaleingang CL synchron die Steuertaktimpulsfolge MT zugeführt. Den Ausgang der Eingangssynchronisiereinrichtung ETS bildet ein UND-Glied G1, welches eingangsseitig mit einem invertierenden Ausgang $\overline{Q}$ und dem D-Eingang der D-Kippstufe FF2 in Verbindung steht. Demgegenüber ist der Ausgang der Ausgangssynchronisiereinrichtung ATS durch ein ODER-Glied G2 gebildet. Dieses ODER-Glied ist eingangsseitig einerseits an einen invertierenden Ausgang $\overline{Q}$ und an den D-Eingang der D-Kippstufe FF4 angeschlossen.

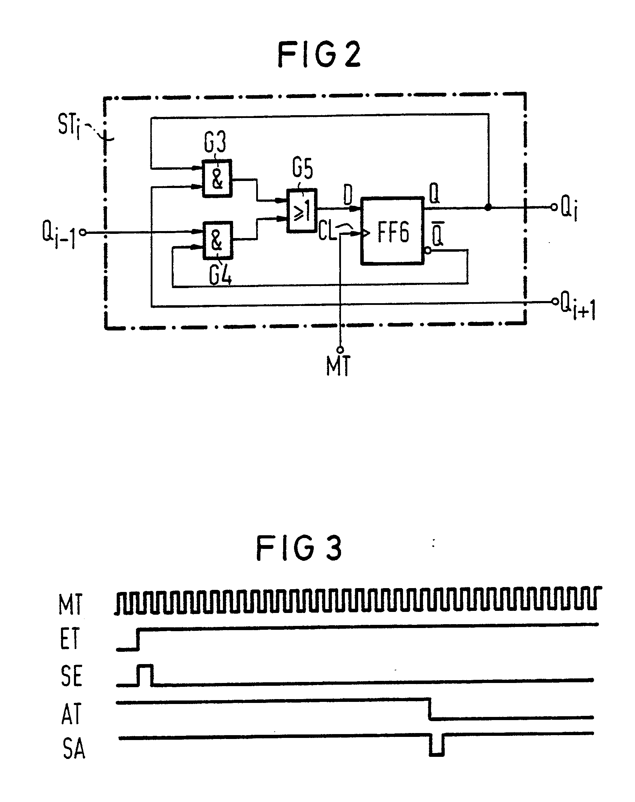

Die Wirkungsweise der gerade erläuterten Synchronisiereinrichtungen ETS und ATS ergibt sich aus dem in FIG 3 dargestellten Impulsdiagramm. Wie aus diesem Impulsdiagramm hervorgeht, gibt die Eingangssynchronisiereinrichtung ETS bei Auftreten einer ansteigenden Flanke eines Empfangstaktimpulses ET (logischer Pegel "1") über die mit dem UND-Glied G1 verbundene Leitung SE einen Ausgangsimpuls in Form eines logischen Pegels "1" ab, dessen Beginn mit einer abfallenden Flanke eines Steuertaktimpulses der Steuertaktimpulsfolge MT zusammenfällt und dessen Impulsbreite der Periodendauer eines Steuertaktimpulses entspricht. Demgegenüber stellt die Ausgangssynchronisiereinrichtung ATS bei Auftreten einer abfallenden Flanke eines Sendetaktimpulses AT über die mit dem ODER-Glied G2 verbundene Leitung SA einen Ausgangsimpuls in Form eines logischen Pegels "0" bereit, dessen Beginn mit der abfallenden Flanke eines Steuertaktimpulses der Steuertaktimpulsfolge MT zusammenfällt und dessen Impulsbreite der Periodendauer eines Steuertaktimpulses entspricht.

In FIG 2 ist ein möglicher Aufbau der bereits genannten, in FIG 1 dargestellten Steuereinrichtungen ST1 bis STn dargestellt. Danach weist jede der Steuereinrichtungen eine flankengesteuerte D-Kippstufe FF6 auf, welche über ihren D-Eingang mit einem Ausgang einer Verknüpfungsanordnung verbunden ist und durch welche für die zugeordnete D-Kippstufe (DFF1,..., DFFn) ein Freizustand durch einen logischen Pegel "0" bzw. ein Belegtzustand durch einen logischen Pegel "1" an einem Ausgang Q angezeigt ist. Den Ausgang der Verknüpfungsanordnung bildet dabei ein ODER-Glied G5, welches eingangsseitig mit zwei UND-Gliedern G3 und G4 verbunden ist. Das UND-Glied G3 steht über zwei Eingänge einerseits mit einem nichtinvertierenden Ausgang Q der D-Kippstufe FF6 und andererseits mit einem Anschluß $Q_{i+1}$ in Verbindung. Demgegenüber ist das UND-Glied G4 mit zwei Eingängen einerseits an einen invertierenden Ausgang der D-Kippstufe FF6 und andererseits an einen mit $Q_{i-1}$ bezeichneten Anschluß angeschlossen. Der Anschluß $Q_{i+1}$ stellt dabei für die in FIG 1 dargestellte Steuereinrichtung STn den Ausgang der Ausgangssynchronisiereinrichtung ATS, für die übrigen in FIG 1 dargestellten Steuereinrichtungen ST1 bis STn-1 den Ausgang der jeweils unmittelbar nachfolgenden Steuereinrichtung dar. Bei dem mit $Q_{i-1}$ bezeichneten Anschluß handelt es sich dagegen für die Steuereinrichtung ST1 um den Ausgang der Eingangssynchronisiereinrichtung ETS, für die übrigen Steuereinrichtungen ST2 bis STn um den Ausgang der jeweils unmittelbar vorangehenden Steuereinrichtung.

Mit der gerade beschriebenen Verknüpfungsanordnung wird also mit Hilfe des ODER-Gliedes G5 und der beiden UND-Glieder G3 und G4 eine logische Verknüpfung in der Form $Q_{i-1}\,\overline{Q}_i + Q_{i+1}\,Q_i$ vorgenommen, wobei i eine der Steuereinrichtungen ST1 bis STn bezeichnet. Aus dieser Verknüpfung resultiert, daß einerseits bei Vorliegen einer Anzeige eines Belegtzustandes (logischer Pegel "1") durch die der unmittelbar vorangehenden Steuereinrichtung i-1 zugehörige Zustandskippstufe bzw. bei Vorliegen eines Ausgangsimpulses am Ausgang der Eingangssynchronisiereinrichtung ETS und bei Vorliegen einer Anzeige eines Freizustandes (logischer Pegel "0") durch die der Steuereinrichtung i zugehörige Zustandskippstufe ein logischer Pegel "1" bereitgestellt ist. Dieser logische Pegel bewirkt, daß durch das Auftreten des nächsten Steuertaktimpulses am Taktsignaleingang der der Steuereinrichtung i zugehörigen Zustandskippstufe diese derart gesteuert ist, daß an deren Ausgang Q nunmehr ein logischer Pegel "1" als Anzeige eines Belegtzustandes auftritt. Die durch diesen Pegelwechsel auftretende Impulsflanke wird dabei der zugeordneten D-Kippstufe als Steuersignal für die Aufnahme eines Binärsignals zugeführt. Andererseits bewirkt die logische Verknüpfung, daß bei Vorliegen einer Anzeige eines Belegtzustandes (logischer Pegel "1" durch die der Steuereinrichtung i zugehörige Zustandskippstufe und einer Anzeige eines Freizustandes durch die der unmittelbar nachfolgenden Steuereinrichtung i + 1 zugehörige Zustandskippstufe bzw. bei Abgabe eines Ausgangsimpulses durch die Ausgangssynchronisiereinrichtung ATS ein logischer Pegel "0" bereitgestellt ist. Aufgrund dieses logischen Pegels wird dann mit dem Auftreten des nächsten Steuertaktimpulses am Taktsignaleingang der der Steuereinrichtung i zugehörigen Zustandskippstufe der bis dahin an deren Ausgang Q anliegende logische Pegel "1" in einen logischen Pegel "0" geändert, d. h. durch diese Zustandskippstufe ist von diesem Zeitpunkt an ein Freizustand für die zugeordnete D-Kippstufe angezeigt.

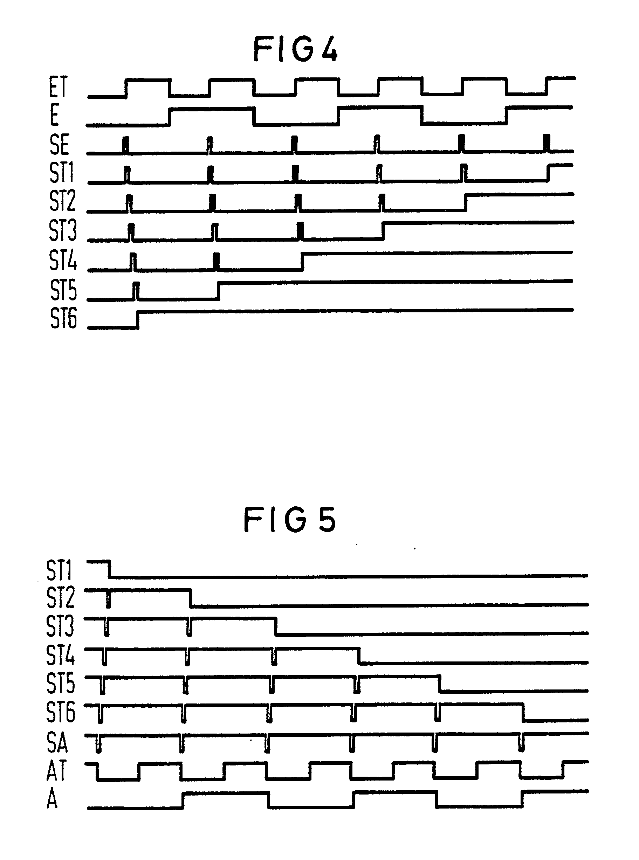

In FIG 4 sind als Beispiel in einem Impulsdiagramm die Steuerungsvorgänge für die Aufnahme einer Binärsignalfolge über den Eingang E in eine insgesamt 6 D-Kippstufen DFF1 bis DFF6 und damit 6 Steuereinrichtungen ST1 bis ST6 aufweisende, zunächst nicht belegte Durchlaufspeicheranordnung dargestellt. Wie daraus hervorgeht, wird mit dem Auftreten einer ansteigenden Flanke eines Empfangstaktimpulses ET von der Eingangssynchronisiereinrichtung ETS her auf der Leitung SE ein Ausgangsimpuls (logischer Pegel "1") erzeugt. Auf das Auftreten dieses Ausgangsimpulses hin werden dann von den Steuereinrichtungen ST1 bis ST6 nachein ander Steuersignale jeweils in Form einer ansteigenden Impulsflanke erzeugt, durch welche das zusammen mit dem Eingangstaktimpuls auftretende Binärsignal von D-Kippstufe zu D-Kippstufe bis zu der der Steuereinrichtung ST6 zugehörigen D-Kippstufe DFF6 weitergeleitet wird. Durch die Steuereinrichtung ST6 wird mit der Aufnahme des betreffenden Binärsignals in die D-Kippstufe DFF6 ein Belegtzustand (logischer Pegel "1") angezeigt. Von den übrigen Steuereinrichtungen ST1 bis ST5 erfolgt dagegen nach einer Weiterleitung des betreffenden Binärsignals die Anzeige eines Freizustandes (logischer Pegel"0"). Dieses Verfahren wird, wie aus dem Impulsdiagramm hervorgeht, mit dem Auftreten nachfolgender Empfangstaktimpulse ET und damit Binärsignale fortgesetzt, bis die D-Kippstufen DFF1 bis DFF6 nacheinander mit einem Binärsignal belegt sind und die jeweils zugehörige Steuereinrichtung dementsprechend einen Belegtzustand (logischer Pegel "1") anzeigt. Dies ist bei dem vorliegenden Ausführungsbeispiel nach der Aufnahme von 6 Binärsignalen der Fall.

In FIG 5 sind in einem Impulsdiagramm die auf eine gerade erläuterte Zwischenspeicherung von Binärsignalen folgenden Steuerungsvorgänge dargestellt. Wie aus diesem Impulsdiagramm hervorgeht, wird mit dem Auftreten einer abfallenden Flanke eines Sendetaktimpulses AT über die Leitung SA ein Ausgangsimpuls bereitgestellt. Das Auftreten dieses Ausgangsimpulses bewirkt, daß das in der letzten der zu der Durchlaufspeicheranordnung gehörenden D-Kippstufen (DFF6) gerade gespeicherte Binärsignal über den Ausgang A abgegeben wird. Nachfolgend werden von den Steuereinrichtungen ST6 bis ST2 her den zugehörigen D-Kippstufen Steuersignale jeweils in Form einer aufsteigenden Impulsflanke zugeleitet. Durch diese Folge von Steuersignalen werden die bisher in den D-Kippstufen DFF1 bis DFF5 gespeicherten Binärsignale derart von D-Kippstufe zu D-Kippstufe weitergeleitet, daß anschließend die D-Kippstufen DFF2 bis DFF6 wieder mit einem Binärsignal belegt sind, d. h. daß, wie aus FIG 5 hervorgeht, von den Steuereinrichtungen ST2 bis ST6 jeweils ein Belegtzustand (logischer Pegel "1") angezeigt ist. Von der Steuereinrichtung ST1 wird dagegen ein Freizustand angezeigt, da das bisher in der D-Kippstufe DFF1 gespeicherte Binärsignal nunmehr in die D-Kippstufe DFF2 aufgenommen ist. Das gerade erläuterte Verfahren wird anschließend mit dem Auftreten nachfolgender Sendetaktimpulse AT fortgesetzt, bis schließlich sämtliche zuvor in den D-Kippstufen DFF1 bis DFF6 gespeicherten Binärsignale über den Ausgang A weitergeleitet sind und dementsprechend von den Steuereinrichtungen ST1 bis ST6 jeweils ein Freizustand für die zugehörige D-Kippstufen angezeigt ist.

Vorstehend wurde anhand der FIGUREN 4 und 5 lediglich für eine vereinfachte Darstellung der Fall betrachtet, daß in die betreffende Durchlaufspeicheranordnung 6 Binärsignale aufgenommen und diese zunächst ohne Aufnahme weiterer Binärsignale über den Ausgang A weitergeleitet werden. Im allgemeinen wird jedoch auf die Weiterleitung eines Binärsignals über den Ausgang A in die dadurch freiwerdende D-Kippstufe DFF1 erneut ein am Eingang E auftretendes Binärsignal aufgenommen.

Vorstehend wurde anhand der FIG 1 lediglich als Beispiel eine Durchlaufspeicheranordnung für die Aufnahme einer einzigen Binärsignalfolge beschrieben. Eine solche Durchlaufspeicheranordnung kann jedoch auch derart ausgebildet sein, daß die für die Aufnahme und Weiterleitung von Binärsignalen vorgesehenen D-Kippstufen jeweils in einer solchen Anzahl vorhanden sind, daß eine vorgegebene Anzahl von Binärsignalfolgen gleichzeitig in die betreffende Durchlaufspeicheranordnung aufnehmbar und von dieser wieder abgebbar ist. In diesem Falle sind die einander zugehörigen D-Kippstufen mit ihren Taktsignaleingängen gemeinsam an den Ausgang Q der der zugeordneten Steuereinrichtung zugehörigen Zustandskippstufe angeschlossen.

Abschließend sei auch noch darauf hingewiesen, daß vorstehend zwar als Ausführungsbeispiel eine Durchlaufspeicheranordnung be schrieben worden ist, deren zugehörige Kippstufen als flankengesteuerte D-Kippstufen ausgebildet sind. Anstelle derartiger D-Kippstufen können jedoch auch in anderer Weise ausgebildete flankengesteuerte Kippstufen benutzt sein. Darüber hinaus können aber auch die den einzelnen Steuereinrichtungen zugehörigen Verknüpfungsanordnungen für die obenangegebene logische Verknüpfung einen gegenüber dem beschriebenen Ausführungsbeispiel abweichenden schaltungstechnischen Aufbau aufweisen. Außerdem kann die logische Verknüpfung durch die Verknüpfungsanordnungen bei einer Modifizierung der logischen Pegel für die Anzeige eines Freizustandes bzw. Belegtzustandes durch die Zustandskippstufen entsprechend modifiziert sein.

**Ansprüche**

1. Durchlaufspeicheranordnung (FIFO) für die Zwischenspeicherung einer eine Vielzahl von Binärsignalen aufweisenden Binärsignalfolge, mit einer die Binärsignalfolge aufnehmenden Eingangsstufe (DFF1, ST1, ETS), mit einer die Binärsignalfolge abgebenden Ausgangsstufe (DFFn, STn, ATS, FF5), mit einer Mehrzahl von in Kette geschalteten, zwischen Eingangsstufe und Ausgangsstufe liegenden Registerstufen (DFF2, DFFn-1) und mit den Registerstufen individuell zugeordneten, in Kette geschalteten Steuereinrichtungen (ST2,..., STn-1) in welchen jeweils eine Zustandskippstufe (FF6) für die Anzeige eines Freizustandes bzw. Belegtzustandes der zugeordneten Registerstufe vorhanden ist, und durch welche jeweils immer dann der zugeordneten Registerstufe ein die Aufnahme eines Binärsignals der Binärsignalfolge bewirkendes Steuersignal zugeführt ist, wenn durch eine der jeweiligen Steuereinrichtung zugehörige Verknüpfungsanordnung (G3, G4, G5) die Anzeige eines Freizustandes durch die zugehörige Zustandskippstufe und ein Belegtzustand der unmittelbar vorangehenden Registerstufe festgestellt ist, wobei die betreffende Anzeige eines Freizustandes auf das Auftreten des Steuersignals hin in eine Anzeige eines Belegtzustandes geändert ist und diese Anzeige eines Belegtzustandes dann bis zur Abgabe eines Steuersignals durch die der jeweiligen Steuereinrichtung unmittelbar nachfolgende Steuereinrichtung bestehen bleibt,
**dadurch gekennzeichnet,**
daß die Kette von Registerstufen (DFF2,..., DFFn-1) aus hinsichtlich ihrer Datensignaleingänge und Datensignalausgänge direkt gekoppelten, flankengesteuerten ersten Kippstufen mit jeweils einem gesonderten Taktsignaleingang gebildet sind, daß die den Steuereinrichtungen (ST2,..., STn-1) jeweils zugehörige Zustandskippstufe (FF6) als flankengesteuerte Kippstufe ausgebildet ist, deren Datensignaleingang mit der der jeweiligen Steuereinrichtung zugehörigen Verknüpfungsschaltung und deren Datensignalausgang mit dem Taktsignaleingang der der jeweiligen Steuereinrichtung zugeordneten ersten Kippstufe verbunden ist ,
daß sämtliche Zustandskippstufen über jeweils einen Taktsignaleingang synchron mit einer Steuertaktimpulsfolge beaufschlagt sind, deren Steuertaktimpulse mit einer gegenüber der Folgefrequenz der der Binärsignalfolge zugehörigen Binärsignale wesentlich höheren Folgefrequenz auftreten,
daß jede der Zustandskippstufen von der zugehörigen Verknüpfungsanordnung solche Eingangssignale zugeführt erhält, daß einerseits bei Anzeige eines Freizustandes durch die jeweilige Zustandskippstufe und eines Belegtzustandes durch die der unmittelbar vorangehenden Steuereinrichtung zugehörigen Zustandskippstufe auf das nächste Auftreten eines Steuertaktimpulses hin von der jeweiligen Zustandskippstufe ein Belegtzustand angezeigt ist und andererseits bei Anzeige eines Belegtzustandes durch die jeweilige Zustandskippstufe und eines Freizustandes durch die der unmittelbar nachfolgenden Steuereinrichtung zugehörigen Zustandskippstufe auf das nächste Auftreten eines Steuertaktimpulses hin von der jeweiligen Zustandskippstufe ein Freizustand angezeigt ist
und daß eine durch einen Anzeigewechsel von einem Freizustand in einen Belegtzustand durch die jeweilige Zustandskippstufe bedingte Impulsflanke als Steuersignal der zugeordneten ersten Kippstufe zugeführt ist.

2. Durchlaufspeicheranordnung nach Anspruch 1,
**dadurch gekennzeichnet,**
daß die Eingangsstufe (DFF1, ST1, ETS) aus einer den ersten Kippstufen entsprechenden Eingangskippstufe (DFF1), einer dieser zugeordneten, den Steuereinrichtungen entsprechenden Eingangssteuereinrichtung (ST1) und einer Eingangssynchronisiereinrichtung (ETS) gebildet ist,
daß die Eingangskippstufe an einem Datensignaleingang mit der Binärsignalfolge beaufschlagt ist und über einen Datensignalausgang mit dem Datensignaleingang der ersten zu der Kette von Registerstufen gehörenden Kippstufe (DFF2) verbunden ist,

daß der Eingangssynchronisiereinrichtung (ETS) als Eingangssi gnale die Steuertaktimpulsfolge sowie Eingangstaktimpulse zugeführt sind, welche mit einer der Folgefrequenz der Binärsignale der Binärsignalfolge entsprechende Folgefrequenz auftreten,

daß die betreffenden Eingangssignale durch die Eingangssynchronisiereinrichtung derart miteinander verknüpft sind, daß an deren Ausgang bei Auftreten eines Eingangstaktimpulses ein mit der Impulsflanke eines Steuertaktimpulses beginnender und eine der Periodendauer eines Steuertaktimpulses entsprechende Impulsbreite aufweisender Ausgangsimpuls bereitgestellt ist

und daß das Auftreten eines solchen Ausgangsimpulses von der der Eingangssteuereinrichtung zugehörigen Verknüpfungsanordnung als Anzeige eines Belegtzustandes einer unmittelbar vorangehenden Steuereinrichtung gewertet ist.

3. Durchlaufspeicheranordnung nach Anspruch 1 oder 2,

**dadurch gekennzeichnet,**

daß der Ausgangsstufe (DFFn, STn, FF5, ATS) zwei in Kette geschaltete, den ersten Kippstufen (DFF2,..., DFFn-1) entsprechende Ausgangskippstufen (DFFn, FF5) zugehörig sind,

daß eine erste der Ausgangskippstufen (DFFn) über einen Datensignaleingang mit der letzten der zu der Kette von Registerstufen gehörenden Kippstufen (DFFn-1) verbunden ist und dieser ersten Ausgangskippstufe eine den Steuereinrichtungen (ST2,..., STn-1) entsprechende Ausgangssteuereinrichtung (STn) zugeordnet ist,

daß die zweite der Ausgangskippstufen (FF5) über einen Taktsignaleingang mit einer Ausgangssynchronisiereinrichtung (ATS) verbunden ist,

daß der Ausgangssynchronisiereinrichtung als Eingangssignale die Steuertaktimpulsfolge sowie Ausgangstaktimpulse zugeführt sind, welche mit einer der Folgefrequenz der Binärsignale der Binärsignalfolge entsprechende Folgefrequenz auftreten,

daß die betreffenden Eingangsignale durch die Ausgangssynchronisiereinrichtung derart miteinander verknüpft sind, daß an deren Ausgang bei Auftreten eines Ausgangstaktimpulses ein mit der Impulsflanke eines Steuertaktimpulses beginnender und eine der Periodendauer eines Steuertaktimpulses entsprechende Impulsbreite aufweisender Ausgangsimpuls bereitgestellt ist

und daß das Auftreten eines solchen Ausgangsimpulses von der der Ausgangssteuereinrichtung (STn) zugehörigen Verknüpfungsanordnung als Anzeige eines Belegtzustandes für die zweite Ausgangskippstufe (FF5) gewertet ist.

4. Durchlaufspeicheranordnung nach einem der Ansprüche 1 bis 3,

**dadurch gekennzeichnet,**

daß die für die Aufnahme von Binärsignalen vorgesehenen Kippstufen und die Zustandskippstufen jeweils als D-Kippstufen (DFF1,..., DFFn) ausgebildet sind und von diesen jeweils ein Freizustand durch einen logischen Pegel "0" bzw. ein Belegtzustand durch einen logischen Pegel "1" angezeigt ist,

und daß durch die mit den Zustandskippstufen verbundenen Verknüpfungsanordnungen jeweils eine Verknüpfung in der Form $Q_{i-1} \overline{Q}_i + Q_i Q_{i+1}$ durchgeführt ist, wobei $Q_i$ bzw. $\overline{Q}_i$ ein Ausgangssignal bzw. ein invertiertes Ausgangssignal der einer Steuereinrichtung i zugehörigen Zustandskippstufe, $Q_{i-1}$ ein Ausgangssignal der der unmittelbar vorangehenden Steuereinrichtung i - 1 zugehörigen Zustandskippstufe bzw. der Eingangssynchronisiereinrichtung und $Q_{i+1}$ ein Ausgangssignal der der unmittelbar nachfolgenden Steuereinrichtung i + 1 zugehörigen Zustandskippstufe bzw. der Ausgangssynchronisiereinrichtung darstellen.

5. Durchlaufspeicheranordnung nach einem der Ansprüche 1 bis 4,

**dadurch gekennzeichnet,**

daß die ersten Kippstufen (DFF2,..., DFFn-1) bzw. die Eingangskippstufe (DFF1) bzw. die Ausgangskippstufen (DFFn, FF5) jeweils in einer solchen Anzahl vorhanden sind, daß eine vorgegebene Anzahl von Binärsignalfolgen gleichzeitig aufnehmbar und abgebbar ist, und daß die einander zugehörigen Kippstufen über ihre Taktsignaleingänge gemeinsam mit dem Datensignalausgang der der zugeordneten Steuereinrichtung zugehörigen Zustandskippstufe verbunden sind.

# FIG 1

EP 0 407 642 A1

# FIG 2

# FIG 3

# FIG 4

# FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 745 535 (DeKOE et al.)<br>* Zusammenfassung; Spalte 3, Zeile 27 - Spalte 4, Zeile 6; Spalte 5, Zeile 30 - Spalte 6, Zeile 56; Spalte 7, Zeilen 49-64; Spalte 10, Zeilen 10-24; Figur 1 * | 1,2,4,5 | G 06 F 5/06 |
| A | | 3 | |
| | --- | | |
| A | WESCON TECHNICAL PAPERS, 30. Oktober/2. November 1984, Seiten 1-8, Anaheim, California, US; PINEAU et al.: "Semi custom gate array chip to handle 60HZ noninterlaced video"<br>* Seite 5, Spalte 1, Zeile 18 - Seite 6, Spalte 1, Zeile 20; Figur 5 * | 1,4 | |
| | ----- | | |
| | | | RECHERCHIERTE SACHGEBIETE (Int. Cl.5)<br><br>G 06 F |

Der vorliegende Recherchenbericht wurde für alle Patentansprüche erstellt

| Recherchenort | Abschlußdatum der Recherche | Prüfer |
|---|---|---|
| DEN HAAG | 05-03-1990 | COHEN B. |